# EUROPEAN PATENT SPECIFICATION

(11) **EP 3 557 999 B1**
(45) Date of publication and mention of the grant of the patent: **19.08.2026**
(21) Application number: 17832320.0
(22) Date of filing: 18.12.2017
(51) Int. Cl.: A01N 59/00, A01N 25/00, A01K 61/13

(54) **ECTOPARASITE REDUCTION**
EKTOPARASITENREDUKTION
RÉDUCTION D'ECTOPARASITES

(30) Priority: 23.12.2016 GB 201622204
(43) Date of publication of application: 30.10.2019
(73) Proprietor: Pulcea Ltd, Edinburgh Midlothian EH3 8HA (GB); University of Dundee, Dundee DD1 4HN (GB); University of Stirling, Stirling FK9 4LA (GB)
(72) Inventor: ARMSTRONG, Ian Malcolm Arthur, Inverness IV1 1HT (GB); CAMPBELL, Paul, Dundee DD1 4HN (GB); BRON, James, Stirling FK9 4LA (GB)
(74) Representative: Hindles Limited
(86) International application number: PCT/GB2017/053781
(87) International publication number: WO 2018/115826

(56) References cited:
- EP-A1- 2 799 401
- WO-A1-2014/078958
- WO-A1-94/17657
- WO-A2-2012/166667
- GB-A- 2 309 621
- TREASURER JAMES W ET AL: "The efficacy of hydrogen peroxide for the treatment of farmed Atlantic salmon, Salvo salar L. infested with sea lice ( Copepoda: Caligidae)", AQUACULTURE, vol. 148, no. 4, 15 February 1997 (1997-02-15), pages 265 - 275, XP093369694
- HOFFMANN M R ET AL: "Application of ultrasonic irradiation for the degradation of chemical contaminants in water", ULTRASONICS: SONOCHEMISTRY, BUTTERWORTH-HEINEMANN, GB, vol. 3, no. 3, 1 November 1996 (1996-11-01), pages S163 - S172, XP004063051, ISSN: 1350-4177, DOI: 10.1016/S1350-4177(96)00022-3

## Description

### Field of the invention

Any references to methods of treatment in the subsequent paragraphs of this description are to be interpreted as references to the compounds and compositions medicaments of the present invention for use in a method for treatment of the aquatic animal body by therapy unless explicitly stated otherwise. The invention relates to methods, apparatus, kits of parts and compositions for injuring or killing aquatic ectoparasites, reducing ectoparasitic infestation on aquatic animals and improving the appearance, meat quality, meat quantity and growth rates of aquatic animals.

### Background to the invention

Aquatic animals, such as fish, can become infested by aquatic ectoparasites. These ectoparasites typically cling to the external surface of the aquatic animals and consume the animals' flesh, mucus and blood. Ectoparasitic infestation of an aquatic animal can therefore cause significant physical damage to the animal; it can also increase the risk of infection by pathogens due to the formation of open wounds. Ectoparasites may themselves also act as vectors for disease transmission between aquatic animals.

The likelihood of ectoparasitic infection is higher in confined environments in which the aquatic animals come into close contact with one another. One example of such a confined environment is a fish farm. For example, the commonly-farmed Atlantic salmon *(Salmo salar)* may become infested by sea lice of the species *Lepeophtheirus salmonis.* Sea lice infestation on salmon farms causes significant damage to the fish (including fish death) and results in reduced salmon output. Sea lice infestation also causes a generalised chronic stress response in the fish, which may make them susceptible to infection by other diseases and which may reduce meat yield.

Existing treatments for ectoparasitic infection of aquatic animals such as salmon typically include chemical bath treatments, drug treatments, heat treatment and mechanical removal of the parasites. Hydrogen peroxide is commonly used as a chemical bath treatment on salmon farms because it can effectively remove sea lice from the fish and it is effectively environmentally-friendly as it decomposes into water and oxygen over time. However, strains of sea lice have now developed which are resistant to treatment by hydrogen peroxide. Drug treatments raise concerns for subsequent fish consumers. Heat treatment of aquatic animals can be difficult to control in practice. Mechanical removal of lice is labour intensive and has a negative effect on fish welfare, particularly if the health of the fish is compromised before treatment commences.

WO 94/17657 A1 discloses a method of removing parasites from fish by subjecting them to sound waves, preferably in a pipe interconnecting two floating netting containers.

HOFFMANN M R et al., (1996) 'Application of ultrasonic irradiation for the degradation of chemical contaminants in water', Ultrasonics Sonochemistry, 3(3), pp. S163-S172. doi:10.1016/s1350-4177(96)00022-3 discloses an investigation into the sonochemical degradation of a variety of chemical contaminants in aqueous solution, and describes how ultrasonic irradiation appears to be an effective method for the rapid destruction of organic contaminants in water.

GB 2 309 621 A discloses a method for reducing parasite infestation or damage to aquatic creatures includes means for generating transitional cavitational events in the medium surrounding the creatures so as to produce biological changes which affect their development cycle and life expectancy.

WO 2012/166667 A2 describes systems and methods for disinfecting medical instruments, the system comprising an ultrasonicator component configured to sonicate into the volume of a chamber when fluid is present.

WO 2014/078958 A1 discloses a sterilization method and apparatus uses ultrasonic vibrations and a sterilant bath, preferably ozone or hydrogen peroxide, for cleaning, disinfecting or sterilizing an article, whereby the ultrasonic vibrations generate cavitation microbubbles for damaging microbiological forms in the bath or on the article.

EP 2 799 401 A1 discloses a purifying device capable of effectively purifying a liquid and a method of operating the same, wherein the liquid is effectively purified by combining liquid purification that is performed by electric discharge and liquid purification that is performed by decomposing hydrogen peroxide produced by the electric discharge into hydroxyl radicals by ultrasonic waves.

Treasurer and Grant in Aquaculture 1997, 148, 265-275 describes the use of hydrogen peroxide for the treatment of farmed Atlantic salmon infested with sea lice, wherein the lethal effect of hydrogen peroxide in treating sea lice, mainly Lepeophtheirus salmonis, was examined in laboratory *in vitro* and on farmed Atlantic salmon.

Accordingly, there is a need for new methods of injuring or killing aquatic ectoparasites, such as sea lice, which are both effective and environmentally-friendly, in order to reduce ectoparasitic infestations in, for example, fish farms.

### Summary of the invention

A first aspect of the invention provides an apparatus for use in reducing aquatic ectoparasitic infestation (i.e. ectoparasitosis) on an aquatic animal, the apparatus comprising an aquatic enclosure for retaining the aquatic animal (i.e. during treatment) and means for directing sound waves into the aquatic enclosure (i.e. a source of sound waves configured to direct sound waves into the aquatic enclosure), wherein the aquatic enclosure retains an aqueous solution comprising hydrogen peroxide at a concentration greater than or equal to 20 mg/L, and wherein the soundwaves have a frequency of between 1 kHz and 100 kHz, inclusive.

The means for directing sound waves into the aquatic enclosure (i.e. the source of sound waves configured to direct sound waves into the aquatic enclosure) may comprise (e.g. be) one or more (i.e. electroacoustic) transducers (e.g. an array of transducers). The one or more transducers are typically one or more sonic transducers (e.g. an array of sonic transducers). Sonic transducers are transducers configured to generate sound waves in a surrounding medium. The one or more transducers may be one or more ultrasonic transducers (e.g. an array of ultrasonic transducers). Ultrasonic transducers are transducers configured to generate ultrasound waves in a surrounding medium.

The means for directing sound waves into the aquatic enclosure (i.e. the source of sound waves configured to direct sound waves into the aquatic enclosure) may comprise (e.g. consist of) one or more loudspeakers (e.g. an array of loudspeakers).

The means for directing sound waves into the aquatic enclosure (i.e. the source of sound waves configured to direct sound waves into the aquatic enclosure) may be configured to direct sound waves having a frequency greater than or equal to 1 kHz, or greater than or equal to 20 kHz, or greater than or equal to 25 kHz into the enclosure. The means for directing sound waves into the aquatic enclosure (i.e. the source of sound waves configured to direct sound waves into the aquatic enclosure) may be configured to direct sound waves having a frequency less than or equal to 100 kHz into the enclosure. The means for directing sound waves into the aquatic enclosure (i.e. the source of sound waves configured to direct sound waves into the aquatic enclosure) may be configured to direct sound waves having a frequency between 1 kHz and 100 kHz, inclusive, or between 20 kHz and 100 kHz, inclusive, or between 25 kHz and 100 kHz, inclusive, into the enclosure.

The aquatic enclosure comprises (e.g. retain) an aqueous solution comprising hydrogen peroxide at a concentration greater than or equal to 20 mg/L or preferably greater than or equal to 200 mg/L. The aquatic enclosure may comprise (e.g. retain) an aqueous solution comprising hydrogen peroxide at a concentration between 20 mg/L and 2500 mg/L, inclusive, or between 200 mg/L and 2500 mg/L, inclusive, or between 20 mg/L and 2200 mg/L, inclusive, or between 200 mg/L and 2200 mg/L, inclusive. The aquatic enclosure may comprise (e.g. retain) an aqueous solution comprising hydrogen peroxide at a concentration of approximately 1500 mg/L (e.g. at a concentration of between 1300 mg/L and 1700 mg/L, inclusive).

It may be that the means for directing sound waves into the aquatic enclosure (i.e. the source of sound waves configured to direct sound waves into the aquatic enclosure) is configured to direct soundwaves having a sound pressure level greater than or equal to 160 dB into the aquatic enclosure.

It may be that the means for directing sound waves into the aquatic enclosure (i.e. the source of sound waves configured to direct sound waves into the aquatic enclosure) is configured to direct soundwaves having a sound pressure level less than or equal to 240 dB into the aquatic enclosure.

It may be that the means for directing sound waves into the aquatic enclosure (i.e. the source of sound waves configured to direct sound waves into the aquatic enclosure) is configured to direct soundwaves into the aquatic enclosure to generate a local energy intensity level of between 0.001 W/cm² and 0.01 W/cm², inclusive.

It may be that the means for directing sound waves into the aquatic enclosure (i.e. the source of sound waves configured to direct sound waves into the aquatic enclosure) is configured to direct soundwaves into the aquatic enclosure to achieve a sound pressure level of between 160 dB and 240 dB, inclusive, in the local environment of the aquatic animal (i.e. in the water or aqueous solution immediately surrounding the aquatic animal).

It may be that the means for directing sound waves into the aquatic enclosure (i.e. the source of sound waves configured to direct sound waves into the aquatic enclosure) is configured to direct sound waves into the aquatic enclosure for a continuous period of at least 30 seconds, or at least 1 minute, or at least 2 minutes, or at least 3 minutes, or at least 4 minutes, or at least 5 minutes, or at least 10 minutes, or at least 15 minutes, or at least 20 minutes.

The aquatic enclosure may be a flexible enclosure. The aquatic enclosure may be a fabric enclosure (i.e. an enclosure formed by one or more sheets of fabric). The aquatic enclosure may be formed by one or more sheets of waterproof or water-resistant fabric (e.g. urethane-coated canvas such as tarpaulin). The aquatic enclosure may comprise a net or cage at least partially surrounded by a one or more sheets of waterproof or water-resistant fabric.

The aquatic enclosure may be an aquarium.

The aquatic enclosure may be located on a sailing vessel. The aquatic enclosure may be located on (e.g. form part of) a boat or ship. The aquatic enclosure may be located on (e.g. form part of) a wellboat.

The aquatic enclosure may comprise (e.g. be) a channel or a barge (i.e. through which the aquatic animal is moved during treatment). The aquatic enclosure may have an inlet and an outlet, wherein the aquatic animal may travel through the aquatic enclosure from the inlet to the outlet (i.e. during treatment).

The aquatic enclosure may be a treatment enclosure located on a wellboat. The treatment enclosure may have an aquatic animal inlet in fluid communication with an external aquatic environment (i.e. outside the wellboat), through which the aquatic animal may be transported from the external aquatic environment into the treatment enclosure.

The wellboat may comprise one or more water flow regulators (e.g. a pump or a siphon) configured to (i.e. in use) transport (e.g. pump) water from the external aquatic environment into the treatment enclosure. Transporting (e.g. pumping) water from the external aquatic environment into the treatment enclosure may also comprise transporting the aquatic animal into the treatment enclosure.

The wellboat may comprise one or more water flow regulators (e.g. a pump or a siphon) configured to transport (e.g. pump) water from the treatment enclosure into the external aquatic environment. Transporting (e.g. pumping) water from the treatment enclosure to the external aquatic environment may also comprise transporting the aquatic animal from the treatment enclosure to the external aquatic environment.

The wellboat (e.g. the treatment enclosure, for example the one or more water flow regulators) may be provided with aquatic ectoparasite filters configured to restrict the transport of aquatic ectoparasites out of the treatment enclosure when water is transported (e.g. pumped) from the treatment enclosure to the external aquatic environment.

The aquatic enclosure may have one or more walls.

The aquatic enclosure may be located in an aquatic environment (e.g. in the sea), that is to say the aquatic enclosure may be surrounded by the aquatic environment (e.g. the sea). An interior of the aquatic enclosure may be separated from (e.g. isolated from) the surrounding aquatic environment by one or more (e.g. solid) walls. Alternatively, the aquatic enclosure may be located onshore (i.e. on land, that is to say not in an aquatic environment such as the sea).

The interior of the aquatic enclosure may be in fluid communication with the aquatic environment by way of one or more channels (e.g. pipes). Water may be transported into and/or out of the aquatic enclosure through the one or more channels (e.g. pipes). The one or more channels (e.g. pipes) may be provided with aquatic ectoparasite filters configured to inhibit transport of aquatic ectoparasites between the interior of the aquatic enclosure and the aquatic environment.

The aquatic enclosure may comprise (e.g. be) a treatment channel (e.g. a pipe) provided between (e.g. connecting) first and second aquatic animal enclosures.

The aquatic animal may be a fish. The aquatic animal may be a salmonid. The aquatic animal may belong to the family *Salmonidae.* The aquatic animal may belong to one of the following genera: *Salmo, Oncorhynchus.* The aquatic animal may belong to one of the following species: *Salmo salar, Oncorhynchus tshawytscha, Oncorhynchus keta, Oncorhynchus kisutch, Oncorhynchus gorbuscha, Oncorhynchus nerka, Oncorhynchus masou, Oncorhynchus mykiss.*

Additionally or alternatively, the aquatic animal may belong to one of the following families: *Arripidae, Carangidae, Polynemidae, Cichlidae, Cyprinidae.* The aquatic animal may belong to one of the following genera: *Arripis, Elagatis, Eleutheronema, Hucho, Dicentrarchus, Sparus, Rachycentron, Lates, Seriola, Tilapia, Cyprinus.* The aquatic animal may belong to one of the following species: *Hucho hucho, Arripis trutta, Elagatis bipinnulata, Eleutheronema tetradactylum, Dicentrarchus labrax, Sparus aurata, Rachycentron canadum, Lates calcarifer, Seriola lalandi, Cyprinus carpio, Tilapia baloni, Tilapia guinasana, Tilapia ruweti, Tilapia sparrmanii.*

Additionally or alternatively, the aquatic animal may belong to one of the following orders: *Siluriformes* or *Nematognathi.* The aquatic animal may be a catfish.

Additionally or alternatively, the aquatic animal may belong to one of the following groups: *Caridea, Dendrobranchiata.* The aquatic animal may be a shrimp or a prawn.

It may be that the aqueous solution comprises a solution of hydrogen peroxide in sea water.

It may be that the aqueous solution comprises a solution of hydrogen peroxide in fresh water.

The aqueous solution may be a physiologically compatible medium. The aqueous solution may comprise (e.g. be) an aquaculture medium, that is to say a medium suitable for use in aquaculture (i.e. the farming of aquatic organisms such as fish, crustaceans, molluscs, aquatic plants and/or algae). The aqueous solution may comprise (e.g. be) a pisciculture medium, that is to say a medium suitable for use in farming fish. The aquaculture or pisciculture medium typically has a similar composition to either (i.e. natural) sea water or fresh water (except for the addition of hydrogen peroxide).

In a second aspect, not forming part of the invention, there may be provided a method of injuring or killing an aquatic ectoparasite comprising: exposing the aquatic ectoparasite to an aqueous solution comprising hydrogen peroxide (i.e. H₂O₂); and exposing the aquatic ectoparasite to sound waves.

The inventors have found that exposing aquatic ectoparasites to the combination of the aqueous solution comprising hydrogen peroxide and to sound waves leads to a surprisingly effective method of injuring or killing the aquatic ectoparasites. Without wanting to be bound by theory, we propose that exposing the aquatic ectoparasite to the aqueous solution comprising hydrogen peroxide results in the formation of bubbles around, on the surface of and/or inside (i.e. inside the body of) the aquatic ectoparasite, and that exposing the aquatic ectoparasite to sound waves typically causes resonance and/or expansion and contraction (including collapse) of the said bubbles, causing physical injury to the body of the aquatic ectoparasite. Injuries caused by resonance and/or expansion and contraction (including collapse) of the bubbles formed around, on the surface of and/or inside (i.e. inside the body of) the aquatic ectoparasite can be sufficient to kill the said aquatic ectoparasite.

It is believed that the bubbles are typically formed by decomposition of hydrogen peroxide to form oxygen and water according the following chemical equation:

2H₂O₂ → 2H₂O + O₂

Hydrogen peroxide is thermodynamically unstable and can decompose spontaneously to form oxygen and water. We propose that the bubbles formed on exposure of the aquatic ectoparasite to the aqueous solution of hydrogen peroxide are typically bubbles of oxygen.

It may be that the bubbles are formed predominantly on the surface of the aquatic ectoparasite.

However, bubbles may also be formed inside (i.e. inside the body of) the aquatic ectoparasite. Hydrogen peroxide may be decomposed biologically by the enzyme catalase (or other antioxidant enzymes such as glutathione peroxidase, glutathione-S-transferase, superoxide dismutase, superoxide reductase, glutathione reductase and thioredoxin), commonly present within the body of aquatic ectoparasites. This may provide a mechanism for bubble formation inside the aquatic ectoparasite.

Because the method of injuring or killing the aquatic ectoparasite is principally physical, the method is effective even when applied to aquatic ectoparasites which are resistant to chemical-only methods (such as peroxide-resistant ectoparasites).

It has previously been proposed to kill aquatic ectoparasites using ultrasound alone (e.g. in GB2309621). However, in the present invention there is a surprising synergy between the combination of the hydrogen peroxide and sound waves that results in a particularly effective mechanism for injuring or killing aquatic ectoparasites, including those which are naturally resistant to hydrogen peroxide treatment.

The aqueous solution comprises hydrogen peroxide at a concentration greater than or equal to 20 mg/L. Concentrations of hydrogen peroxide greater than or equal to 20 mg/L are typically more effective at generating bubbles, particularly when the hydrogen peroxide is dissolved in fresh water.

It may be that the aqueous solution comprises hydrogen peroxide at a concentration greater than or equal to 200 mg/L. Concentrations of hydrogen peroxide of greater than or equal to 200 mg/L are typically more effective at generating bubbles, particularly when the hydrogen peroxide is dissolved in seawater.

It may be that the aqueous solution comprises hydrogen peroxide at a concentration between 20 mg/L and 2500 mg/L, inclusive, or between 200 mg/L and 2500 mg/L, inclusive, or between 20 mg/L and 2200 mg/L, inclusive, or between 200 mg/L and 2200 mg/L, inclusive.

It may be that the aqueous solution comprises hydrogen peroxide at a concentration of approximately 1500 mg/L (e.g. at a concentration of between 1300 mg/L and 1700 mg/L, inclusive). Aqueous solutions of hydrogen peroxide at concentrations of approximately 1500 mg/L have been approved by regulatory authorities in some jurisdictions for use in, for example, the treatment of parasitic infestations of the marine phase of the Atlantic salmon.

It may be that the method comprises exposing the aquatic ectoparasite to sound waves having a frequency greater than or equal to 1 kHz. Sound waves having a frequency greater than or equal to 1 kHz are typically more effective at causing resonance and/or expansion and contraction (including collapse) of the bubbles.

It may be that the method comprises exposing the aquatic ectoparasite to sound waves having a frequency greater than or equal to 20 kHz. Sound waves having frequencies greater than 20 kHz are generally inaudible by many adult human beings and are classified as ultrasound. Use of sound waves having frequencies greater than 20 kHz therefore reduces the likelihood of harm being caused to nearby humans, without the need to wear protective earwear.

It may be that the method comprises exposing the aquatic ectoparasite to sound waves having a frequency greater than or equal to 22.1 kHz. Sound waves having frequencies greater than 22.1 kHz are inaudible by many human beings including both adults and children.

It may be that the method comprises exposing the aquatic ectoparasite to sound waves having a frequency greater than or equal to 25 kHz. Sound waves having frequencies greater than 25 kHz are well beyond the range of human hearing. Use of sound waves having frequencies greater than 25 kHz therefore further reduces the likelihood of harm being caused to nearby humans, without the need to wear protective earwear.

It may be that the method comprises exposing the aquatic ectoparasite to sound waves having a frequency less than or equal to 100 kHz. Sound waves having frequencies greater than 100 kHz may be audible by marine mammals and so their use in aquatic environments may be restricted for environmental reasons in some jurisdictions.

It may be that the method comprises exposing the aquatic ectoparasite to sound waves having a frequency of between 1 kHz and 100 kHz, inclusive, or between 20 kHz and 100 kHz, inclusive, or between 25 kHz and 100 kHz, inclusive.

The resonant frequency of a bubble of gas in an infinite volume of liquid is given by the Minnaert Formula A: $f = \frac{1}{2 πr} \sqrt{\frac{3 {γp}_{0}}{ρ}}$ where *r* is the bubble radius, *γ* is the polytropic coefficient, *p*₀ is the ambient pressure and *ρ* is the density of the liquid. In practice, for bubbles formed in water, this formula can be approximated by Formula B: $f = \frac{3.26}{r}$

It may be that the method comprises exposing the aquatic ectoparasite to sound waves having a frequency determined by the Minnaert Formula A or by the approximate Minnaert Formula B.

It may be that the method comprises determining the radius of bubbles formed on exposure to hydrogen peroxide and thereby selecting the frequency of the sound waves based on the Minnaert Formula A or the approximate Minnaert Formula B.

In practice, the bubbles produced on exposure of the aquatic ectoparasite to sound waves will have a range of different sizes. It may be that the method comprises determining the average or peak radius of bubbles formed on exposure to hydrogen peroxide, determining the resonant frequency corresponding to the said average or peak radius based on the Minnaert Formula A or the approximate Minnaert Formula B, and selecting frequencies of the sound waves which lie predominantly within a range of frequencies containing the said resonant frequency. The range of frequencies may have a lower bound of, for example, 25%, or 50%, or 75% of the said resonant frequency. The range of frequencies may have an upper bound of, for example, 125%, or 150%, or 175% of the said resonant frequency.

It may be that the method comprises exposing the aquatic ectoparasite to sound waves having a frequency between 650 Hz and 326 kHz, inclusive. Frequencies in the range 650 Hz to 326 kHz correspond to resonant frequencies of bubbles having radii of between 0.01 mm and 5 mm.

It may be that the size (e.g. average size) of the bubbles varies (e.g. increases) throughout treatment. It may be that the method comprises varying the frequency of the sound waves. For example, it may be that the method comprises (e.g. continuously) reducing the frequency of the sound waves throughout treatment.

It may be that exposing the aquatic ectoparasite to the aqueous solution of hydrogen peroxide comprises immersing (i.e. submerging) the aquatic ectoparasite in the aqueous solution of hydrogen peroxide. It may be that exposing the aquatic ectoparasite to the aqueous solution of hydrogen peroxide comprises immersing (i.e. submerging) the aquatic ectoparasite at least partially in the aqueous solution of hydrogen peroxide. It may be that exposing the aquatic ectoparasite to the aqueous solution of hydrogen peroxide comprises immersing (i.e. submerging) the aquatic ectoparasite fully in the aqueous solution of hydrogen peroxide.

It may be that exposing the aquatic ectoparasite to the aqueous solution of hydrogen peroxide comprises providing the aquatic ectoparasite in an aquatic environment (i.e. providing the aquatic ectoparasite immersed in (i.e. submerged under) water or an aqueous solution) and adding hydrogen peroxide to that aquatic environment (i.e. to the water or the aqueous solution).

It may be that exposing the aquatic ectoparasite to the sound waves comprises generating said sound waves within the aqueous solution. It may be that exposing the aquatic ectoparasite to the sound waves comprises generating said sound waves within the aquatic environment (i.e. in the water or the aqueous solution) in which the aquatic ectoparasite is provided. It may be that exposing the aquatic ectoparasite to the sound waves comprises directing said sound waves at the aquatic ectoparasite.

It may be that the aquatic ectoparasite is provided inside an aquatic enclosure and that exposing the aquatic ectoparasite to the sound waves comprises directing said sound waves into the aquatic enclosure.

The aquatic enclosure may be a flexible enclosure. The aquatic enclosure may be a fabric enclosure (i.e. an enclosure formed by one or more sheets of fabric). The aquatic enclosure may be formed by one or more sheets of waterproof or water-resistant fabric (e.g. urethane-coated canvas such as tarpaulin). The aquatic enclosure may comprise a net or cage at least partially surrounded by a one or more sheets of waterproof or water-resistant fabric.

The aquatic enclosure may be an aquarium.

The aquatic enclosure may be located on a sailing vessel. The aquatic enclosure may be located on (e.g. form part of) a boat or ship. The aquatic enclosure may be located on (e.g. form part of) a wellboat.

The aquatic enclosure may comprise (e.g. be) a channel or a barge. The aquatic enclosure may have an inlet and an outlet.

The aquatic enclosure may be a treatment enclosure located on a wellboat. The treatment enclosure may have an inlet in fluid communication with an external aquatic environment (i.e. outside the wellboat).

The wellboat may comprise one or more water flow regulators (e.g. a pump or a siphon) configured to (i.e. in use) transport (e.g. pump) water from the external aquatic environment into the treatment enclosure.

The wellboat may comprise one or more water flow regulators (e.g. a pump or a siphon) configured to transport (e.g. pump) water from the treatment enclosure into the external aquatic environment.

The wellboat (e.g. the treatment enclosure, for example the water flow regulator) may be provided with aquatic ectoparasite filters configured to restrict the transport of aquatic ectoparasites out of the treatment enclosure when water is transported (e.g. pumped) from the treatment enclosure to the external aquatic environment.

The aquatic enclosure may have one or more walls.

The aquatic enclosure may be located in an aquatic environment (e.g. in the sea), that is to say the aquatic enclosure may be surrounded by the aquatic environment (e.g. the sea). An interior of the aquatic enclosure may be separated from (e.g. isolated from) the surrounding aquatic environment by one or more (e.g. solid) walls. Alternatively, the aquatic enclosure may be located onshore (i.e. on land, that is to say not in an aquatic environment such as the sea).

The interior of the aquatic enclosure may be in fluid communication with the aquatic environment by way of one or more channels (e.g. pipes). Water may be transported into and/or out of the aquatic enclosure through the one or more channels (e.g. pipes). The one or more channels (e.g. pipes) may be provided with aquatic ectoparasite filters configured to inhibit transport of aquatic ectoparasites between the interior of the aquatic enclosure and the aquatic environment.

The aquatic enclosure may comprise (e.g. be) a treatment channel (e.g. a pipe) provided between (e.g. connecting) first and second aquatic animal enclosures.

The method may comprise exposing the aquatic ectoparasite to the aqueous solution comprising hydrogen peroxide for at least 30 seconds, or at least 1 minute, or at least 2 minutes.

The method may comprise exposing the aquatic ectoparasite to the aqueous solution comprising hydrogen peroxide for at least 3 minutes. The inventors have found that exposure for at least 3 minutes combined with exposure to sound waves is sufficient to form bubbles of oxygen around and/or inside, and to cause observable physical damage and/or death in, isolated aquatic ectoparasites.

The method may comprise exposing the aquatic ectoparasite to the aqueous solution comprising hydrogen peroxide for at least 5 minutes, or at least 10 minutes, or at least 15 minutes, or at least 20 minutes. The longer that the aquatic ectoparasite is exposed to the aqueous solution comprising hydrogen peroxide, the greater the number of bubbles that are formed. The longer that the aquatic ectoparasite is exposed to the aqueous solution comprising hydrogen peroxide, also typically the greater the size of the bubbles that are formed.

The method may comprise exposing the aquatic ectoparasite to the sound waves for at least 30 seconds, or at least 1 minute, or at least 2 minutes.

The method may comprise exposing the aquatic ectoparasite to the sound waves for at least 4 minutes. The inventors have found that exposure to sound waves for at least 4 minutes after exposure to hydrogen peroxide is sufficient to cause observable physical damage and/or death in isolated aquatic ectoparasites.

The method may comprise exposing the aquatic ectoparasite to the sound waves for at least 5 minutes, or at least 10 minutes, or at least 15 minutes, or at least 20 minutes. The longer the exposure to the sound waves, the greater the likelihood that bubble resonance and/or expansion and contraction (including collapse) will injure or kill the aquatic ectoparasite.

It may be that the method comprises exposing the aquatic ectoparasite to the aqueous solution comprising hydrogen peroxide and simultaneously (i.e. at the same time) exposing the aquatic ectoparasite to the sound waves.

It may be that the method comprises exposing the aquatic ectoparasite to the aqueous solution comprising hydrogen peroxide and subsequently exposing the aquatic ectoparasite to the sound waves.

It will be understood that the term ectoparasite refers to a parasite which lives on the outside of its host animal (e.g. on the skin, scales or fins of a fish).

The aquatic ectoparasite typically belongs to the family *Caligidae.* The aquatic ectoparasite typically belongs to one of the following genera: *Lepeophtheirus, Caligus.* The aquatic ectoparasite typically belongs to one of the following species: *Lepeophtheirus salmonis, Caligus clemensi, Caligus rogercresseyi, Caligus elongatus.*

The aquatic ectoparasite may be a marine ectoparasite (i.e. an ectoparasite adapted for life in marine environments, e.g. the ocean). The aqueous solution may comprise a solution of hydrogen peroxide in sea water.

The aquatic ectoparasite may be a freshwater ectoparasite (i.e. an ectoparasite adapted for life in freshwater environments, e.g. in rivers or lakes). The aqueous solution may comprise a solution of hydrogen peroxide in fresh water.

The aqueous solution may be a physiologically compatible medium. The aqueous solution may comprise (e.g. be) an aquaculture medium, that is to say a medium suitable for use in aquaculture (i.e. the farming of aquatic organisms such as fish, crustaceans, molluscs, aquatic plants and/or algae). The aqueous solution may comprise (e.g. be) a pisciculture medium, that is to say a medium suitable for use in farming fish. The aquaculture or pisciculture medium typically has a similar composition to either (i.e. natural) sea water or fresh water (except for the addition of hydrogen peroxide).

In a third aspect, not forming part of the claimed invention, there may be provided a non-therapeutic method of improving the appearance, meat quality, meat quantity and/or growth rate of an aquatic animal comprising: exposing the aquatic animal to an aqueous solution comprising hydrogen peroxide; exposing the aquatic animal to sound waves.

In a fourth aspect, not forming part of the claimed invention, there may be provided a method of reducing aquatic ectoparasitic infestation (e.g. ectoparasitosis) on an aquatic animal comprising: exposing the aquatic animal to an aqueous solution comprising hydrogen peroxide; exposing the aquatic animal to sound waves.

In either the third or fourth aspects, exposing the aquatic animal to the aqueous solution comprising hydrogen peroxide typically results in the formation of bubbles around the aquatic animal and, in particular, around, on the surface of and/or inside (i.e. inside the body of) aquatic ectoparasites located on (i.e. the body of) the aquatic animal. Exposing the aquatic animal to sound waves typically causes resonance and/or expansion and contraction (including collapse) of the said bubbles, causing injuries to the aquatic ectoparasites infesting the aquatic animal. Injuries caused by resonance and/or expansion and contraction (including collapse) of the bubbles formed around, on the surface of and/or inside (i.e. inside the body of) the aquatic ectoparasites can be sufficient to kill the said aquatic ectoparasites. Alternatively, injuries caused by resonance and/or expansion and contraction (including collapse) of the bubbles formed around, on the surface of and/or inside (i.e. inside the body of) the aquatic ectoparasites can be sufficient to cause the aquatic ectoparasites to release their grip on the aquatic animal, thereby being removed from the aquatic animal.

The aqueous solution comprises hydrogen peroxide at a concentration greater than or equal to 20 mg/L or preferably greater than or equal to 200 mg/L

Concentrations of hydrogen peroxide greater than 2500 mg/L do not typically provide any additional benefit but are increasingly expensive to achieve in practice. Higher concentrations of hydrogen peroxide also narrow the therapeutic index of the treatment and are more likely to cause damage to the aquatic animals, particularly at increased water temperatures. The use of concentrations greater than 2500 mg/L may be restricted by environmental regulations in some jurisdictions.

It may be that the aqueous solution comprises hydrogen peroxide at a concentration between 20 mg/L and 2500 mg/L, inclusive, or between 200 mg/L and 2500 mg/L, inclusive, or between 20 mg/L and 2200 mg/L, inclusive, or between 200 mg/L and 2200 mg/L, inclusive. It may be that the aqueous solution comprises hydrogen peroxide at a concentration of approximately 1500 mg/L (e.g. at a concentration of between 1300 mg/L and 1700 mg/L, inclusive). Aqueous solutions of hydrogen peroxide at concentrations of approximately 1500 mg/L are already approved by regulatory authorities in some jurisdictions for use in the treatment of parasitic infestations of the marine phase of the Atlantic salmon.

It may be that either method comprises exposing the aquatic animal to sound waves having a frequency greater than or equal to 1 kHz, or greater than or equal to 20 kHz, or greater than or equal to 25 kHz. It may be that either method comprises exposing the aquatic animal to sound waves having a frequency less than or equal to 100 kHz. It may be that either method comprises exposing the aquatic animal to sound waves having a frequency of between 1 kHz and 100 kHz, inclusive, or between 20 kHz and 100 kHz, inclusive, inclusive, or between 25 kHz and 100 kHz, inclusive.

It may be that the method comprises exposing the aquatic ectoparasite to sound waves having a frequency determined by the Minnaert Formula A or the approximate Minnaert Formula B.

It may be that the method comprises determining the (e.g. average) radius of bubbles formed on exposure to hydrogen peroxide and thereby selecting the frequency of the sound waves based on the Minnaert Formula A or the approximate Minnaert Formula B.

It may be that the method comprises exposing the aquatic ectoparasite to sound waves having a frequency between 650 Hz and 326 kHz, inclusive. Frequencies in the range 650 Hz to 326 kHz correspond to resonant frequencies of bubbles having radii of between 0.01 mm and 5 mm.

It may be that the size (e.g. average size) of the bubbles varies (e.g. increases) throughout treatment. It may be that the method comprises varying the frequency of the sound waves. For example, it may be that the method comprises (e.g. continuously) reducing the frequency of the sound waves throughout treatment.

It may be that exposing the aquatic animal to the aqueous solution of hydrogen peroxide comprises immersing (i.e. submerging) the aquatic animal in the aqueous solution of hydrogen peroxide. It may be that exposing the aquatic animal to the aqueous solution of hydrogen peroxide comprises immersing (i.e. submerging) the aquatic animal at least partially in the aqueous solution of hydrogen peroxide. It may be that exposing the aquatic animal to the aqueous solution of hydrogen peroxide comprises immersing (i.e. submerging) the aquatic animal fully in the aqueous solution of hydrogen peroxide.

It may be that exposing the aquatic animal to the aqueous solution of hydrogen peroxide comprises providing the aquatic animal in an aquatic environment (i.e. providing the aquatic animal immersed in (i.e. submerged under) water or an aqueous solution) and adding hydrogen peroxide to the said aquatic environment (i.e. to the water or the aqueous solution). It may be that the aquatic animal is provided in an aquatic enclosure (i.e. an enclosure retaining the aquatic animal in a volume of water) and that exposing the aquatic animal to the aqueous solution of hydrogen peroxide comprises adding hydrogen peroxide to the aquatic enclosure (i.e. to the water in the aquatic enclosure).

It may be that exposing the aquatic animal to the sound waves comprises generating said sound waves within the aqueous solution. It may be that exposing the aquatic animal to the sound waves comprises generating said sound waves within the aquatic environment (i.e. the water or the aqueous solution) in which the aquatic animal is provided. It may be that exposing the aquatic animal to the sound waves comprises generating said sound waves within the aquatic enclosure. It may be that exposing the aquatic animal to the sound waves comprises directing said sound waves into the aquatic enclosure. It may be that exposing the aquatic animal to the sound waves comprises directing said sound waves at the aquatic animal.

Either method may comprise exposing the aquatic animal to the aqueous solution comprising hydrogen peroxide for at least 30 seconds, or at least 1 minute, or at least 2 minutes, or at least 3 minutes, or at least 5 minutes, or at least 10 minutes, or at least 15 minutes, or at least 20 minutes. The longer the exposure to the aqueous solution comprising hydrogen peroxide, the greater the number of bubbles formed. The longer the exposure to the aqueous solution comprising hydrogen peroxide, also typically the greater the size of the bubbles that are formed.

Either method may comprise exposing the aquatic animal to the sound waves for at least 30 seconds, or at least 1 minute, or at least 2 minutes, or at least 3 minutes, or at least 4 minutes, or at least 5 minutes, or at least 10 minutes, or at least 15 minutes, or at least 20 minutes. The longer the exposure to the sound waves, the greater the likelihood that bubble resonance and/or expansion and contraction (including collapse) will injure and/or kill aquatic ectoparasites infesting the aquatic animal.

It may be that either method comprises exposing the aquatic animal to the aqueous solution comprising hydrogen peroxide and simultaneously (i.e. at the same time) exposing the aquatic animal to the sound waves.

It may be that either method comprises exposing the aquatic animal to the aqueous solution comprising hydrogen peroxide and subsequently exposing the aquatic animal to the sound waves.

The aquatic ectoparasites infesting the aquatic animal typically belong to the family *Caligidae.* The aquatic ectoparasites infesting the aquatic animal typically belong to one of the following genera: *Lepeophtheirus, Caligus.* The aquatic ectoparasites infesting the aquatic animal typically belong to one of the following species: *Lepeophtheirus salmonis, Caligus clemensi, Caligus rogercresseyi, Caligus elongatus.*

The aquatic ectoparasites infesting the aquatic animal may be marine ectoparasites (i.e. ectoparasites adapted for life in marine environments, e.g. the ocean). The aqueous solution may comprise a solution of hydrogen peroxide in sea water.

The aquatic ectoparasites infesting the aquatic animal may be freshwater ectoparasites (i.e. ectoparasites adapted for life in freshwater environments, e.g. in rivers or lakes). The aqueous solution may comprise a solution of hydrogen peroxide in fresh water.

The aqueous solution may be a physiologically compatible medium. The aqueous solution may comprise (e.g. be) an aquaculture medium, that is to say a medium suitable for use in aquaculture (i.e. the farming of aquatic organisms such as fish, crustaceans, molluscs, aquatic plants and/or algae). The aqueous solution may comprise (e.g. be) a pisciculture medium, that is to say a medium suitable for use in farming fish. The aquaculture or pisciculture medium typically has a similar composition to either (i.e. natural) sea water or fresh water (except for the addition of hydrogen peroxide).

Either method may comprise retaining the aquatic animal within the aquatic enclosure. Either method may comprise retaining the aquatic animal within the aquatic enclosure for the duration of the treatment.

The aquatic animal may be a fish. The aquatic animal may be a salmonid. The aquatic animal may belong to the family *Salmonidae.* The aquatic animal may belong to one of the following genera: *Salmo, Oncorhynchus.* The aquatic animal may belong to one of the following species: *Salmo salar, Oncorhynchus tshawytscha, Oncorhynchus keta, Oncorhynchus kisutch, Oncorhynchus gorbuscha, Oncorhynchus nerka, Oncorhynchus masou, Oncorhynchus mykiss.*

Additionally or alternatively, the aquatic animal may belong to one of the following families: *Arripidae, Carangidae, Polynemidae, Cichlidae, Cyprinidae.* The aquatic animal may belong to one of the following genera: *Arripis, Elagatis, Eleutheronema, Hucho, Dicentrarchus, Sparus, Rachycentron, Lates, Seriola, Tilapia, Cyprinus.*

The aquatic animal may belong to one of the following species: *Hucho hucho, Arripis trutta, Elagatis bipinnulata, Eleutheronema tetradactylum, Dicentrarchus labrax, Sparus aurata, Rachycentron canadum, Lates calcarifer, Seriola lalandi, Cyprinus carpio, Tilapia baloni, Tilapia guinasana, Tilapia ruweti, Tilapia sparrmanii.*

Additionally or alternatively, the aquatic animal may belong to one of the following orders: *Siluriformes* or *Nematognathi.* The aquatic animal may be a catfish.

Additionally or alternatively, the aquatic animal may belong to one of the following groups: *Caridea, Dendrobranchiata.* The aquatic animal may be a shrimp or a prawn.

A fifth aspect, forming part of the claimed invention, provides a kit of parts comprising apparatus for use in reducing aquatic ectoparasitic infestation (i.e. ectoparasitosis) on an aquatic animal and a source of hydrogen peroxide. The apparatus comprises an aquatic enclosure for retaining the aquatic animal (i.e. during treatment) and means for directing sound waves into the aquatic enclosure (i.e. a source of sound waves configured to direct sound waves into the aquatic enclosure, such as one or more (i.e. electroacoustic) transducers) wherein the sound waves have a sound pressure level of between 160 dB and 240 dB and a frequency of between 1 kHz and 100 kHz inclusive, the hydrogen peroxide having a concentration greater than or equal to 20 mg/L.

A sixth aspect, forming part of the claimed invention, provides hydrogen peroxide for use in a method of treating ectoparasitic infestation (i.e. ectoparasitosis) of an aquatic animal, wherein the aquatic animal is exposed both to an aqueous solution comprising said hydrogen peroxide at a concentration greater than or equal to 20 mg/L and to sound waves from one or more transducers, at a sound pressure level of between 160 dB and 240 dB, wherein the sound waves have a frequency of between 1 kHz and 100 kHz, inclusive.

A seventh aspect, forming part of the claimed invention, provides an aqueous solution comprising hydrogen peroxide for use in a method of treating ectoparasitic infestation of an aquatic animal, wherein the aquatic animal is exposed both to the said aqueous solution at a concentration of hydrogen peroxide greater than or equal to 20 mg/L and to sound waves from one or more transducers, at a sound pressure level of between 160 dB and 240 dB, wherein the sound waves have a frequency of between 1 kHz and 100 kHz, inclusive.

With regard to either the sixth or the seventh aspects, it may be that the aquatic animal is exposed simultaneously (i.e. at the same time) to the aqueous solution comprising hydrogen peroxide and to the sound waves. Alternatively, it may be that the aquatic animal is exposed to the aqueous solution comprising hydrogen peroxide and subsequently to the sound waves.

The solution comprises hydrogen peroxide at a concentration of greater than or equal to 20 mg/L or greater than or equal to 200 mg/L. It may be that the aqueous solution comprises hydrogen peroxide at a concentration between 20 mg/L and 2500 mg/L, inclusive, or between 200 mg/L and 2500 mg/L, inclusive, or between 20 mg/L and 2200 mg/L, inclusive, or between 200 mg/L and 2200 mg/L, inclusive.

It may be that the aqueous solution comprises hydrogen peroxide at a concentration of approximately 1500 mg/L (e.g. at a concentration of between 1300 mg/L and 1700 mg/L, inclusive).

It may be that the sound waves have a frequency of greater than or equal to 1 kHz, or greater than or equal to 20 kHz, or greater than or equal to 25 kHz. It may be that the sound waves have a frequency less than or equal to 100 kHz. It may be that the sound waves have a frequency of between 1 kHz and 100 kHz, inclusive, or between 20 kHz and 100 kHz, inclusive, or between 25 kHz and 100 kHz, inclusive.

In an eighth aspect, not forming part of the claimed invention, there may be provided a method of injuring or killing a pathogenic amoeba comprising: exposing the amoeba to an aqueous solution comprising hydrogen peroxide (i.e. H₂O₂); and exposing the amoeba to sound waves.

The pathogenic amoeba is typically a pathogenic amoeba which colonises aquatic animals. The aquatic animals are typically fish. The aquatic animals may be salmonids. The aquatic animals may belong to the family *Salmonidae.* The aquatic animals may belong to one of the following genera: *Salmo, Oncorhynchus.* The aquatic animals may belong to one of the following species: *Salmo salar, Oncorhynchus tshawytscha, Oncorhynchus keta, Oncorhynchus kisutch, Oncorhynchus gorbuscha, Oncorhynchus nerka, Oncorhynchus masou, Oncorhynchus mykiss.*

Additionally or alternatively, the aquatic animals may belong to one of the following families: *Arripidae, Carangidae, Polynemidae, Cichlidae, Cyprinidae.* The aquatic animals may belong to one of the following genera: *Arripis, Elagatis, Eleutheronema, Hucho, Dicentrarchus, Sparus, Rachycentron, Lates, Seriola, Tilapia, Cyprinus.* The aquatic animals may belong to one of the following species: *Hucho hucho, Arripis trutta, Elagatis bipinnulata, Eleutheronema tetradactylum, Dicentrarchus labrax, Sparus aurata, Rachycentron canadum, Lates calcarifer, Seriola lalandi, Cyprinus carpio, Tilapia baloni, Tilapia guinasana, Tilapia ruweti, Tilapia sparrmanii.*

Additionally or alternatively, the aquatic animals may belong to one of the following orders: *Siluriformes or Nematognathi.* The aquatic animals may be catfish.

Additionally or alternatively, the aquatic animals may belong to one of the following groups: *Caridea, Dendrobranchiata.* The aquatic animals may be shrimp or prawns.

The pathogenic amoeba may be a pathogenic amoeba which causes amoebic gill disease (AGD) in fish such as salmonids. The pathogenic amoeba may belong to the genus *Neoparamoeba.* The pathogenic amoeba may belong to the species *Neoparamoeba perurans.*

In a ninth aspect, not forming part of the claimed invention, there may be provided a method of reducing amoebic infection in an aquatic animal comprising: exposing the aquatic animal to an aqueous solution comprising hydrogen peroxide; exposing the aquatic animal to sound waves.

Amoebic infection of the aquatic animal typically comprises infection of the aquatic animal by pathogenic amoeba. The aquatic animal may be a fish. The aquatic animal may be a salmonid. The aquatic animal may belong to the family *Salmonidae.* The aquatic animal may belong to one of the following genera: *Salmo, Oncorhynchus.* The aquatic animal may belong to one of the following species: *Salmo salar, Oncorhynchus tshawytscha, Oncorhynchus keta, Oncorhynchus kisutch, Oncorhynchus gorbuscha, Oncorhynchus nerka, Oncorhynchus masou, Oncorhynchus mykiss.*

Additionally or alternatively, the aquatic animal may belong to one of the following families: *Arripidae, Carangidae, Polynemidae, Cichlidae, Cyprinidae.* The aquatic animal may belong to one of the following genera: *Arripis, Elagatis, Eleutheronema, Hucho, Dicentrarchus, Sparus, Rachycentron, Lates, Seriola, Tilapia, Cyprinus.* The aquatic animal may belong to one of the following species: *Hucho hucho, Arripis trutta, Elagatis bipinnulata, Eleutheronema tetradactylum, Dicentrarchus labrax, Sparus aurata, Rachycentron canadum, Lates calcarifer, Seriola lalandi, Cyprinus carpio, Tilapia baloni, Tilapia guinasana, Tilapia ruweti, Tilapia sparrmanii.*

Additionally or alternatively, the aquatic animal may belong to one of the following orders: *Siluriformes or Nematognathi.* The aquatic animal may be a catfish.

Additionally or alternatively, the aquatic animal may belong to one of the following groups: *Caridea, Dendrobranchiata.* The aquatic animal may be a shrimp or a prawn.

The pathogenic amoeba may be a pathogenic amoeba which causes amoebic gill disease (AGD) in fish such as salmonids. The pathogenic amoeba may belong to the genus *Neoparamoeba.* The pathogenic amoeba may belong to the species *Neoparamoeba perurans.*

In a tenth aspect, not forming part of the claimed invention, there may be provided a method treating amoebic gill disease in a fish comprising: exposing the fish to an aqueous solution comprising hydrogen peroxide; exposing the fish to sound waves.

Optional and preferred features of any one aspect are optional features of any other aspect. In particular: optional and preferred features of the second aspect may be optional features of the eighth aspect, replacing the words "aquatic ectoparasite" with "pathogenic amoeba"; optional and preferred features of the fourth aspect may be optional features of the ninth aspect, replacing the words "ectoparasitic infestation" with "amoebic infection"; and optional and preferred features of the fourth aspect may be optional features of the tenth aspect, replacing the words "ectoparasitic infestation" with "amoebic gill disease" and the word "aquatic animal" with "fish".

### Description of the Drawings

An example embodiment of the present invention will now be illustrated with reference to the following Figures in which:
Figure 1 shows an Atlantic salmon infested with sea lice;
Figure 2 shows a plurality of infested Atlantic salmon retained in an undersea cage;
Figure 3 shows the undersea cage of Figure 2 surrounded by a tarpaulin enclosure and an array of ultrasonic transducers, before treatment has commenced;
Figure 4 shows the treatment apparatus of Figure 4 during treatment;
Figure 5 shows sea lice detaching from the Atlantic salmon;
Figure 6 shows the Atlantic salmon of Figure 2 after treatment;
Figure 7 shows a wellboat being loaded with infested Atlantic salmon from an undersea cage;
Figure 8 shows Atlantic salmon during treatment with hydrogen peroxide and exposure to ultrasound on the wellboat of Figure 7;
Figure 9 shows sea lice detached from the Atlantic salmon and caught in a lice filter of the wellboat of Figure 7;
Figure 10 shows the Atlantic salmon of Figure 7 having been returned to the undersea cage;

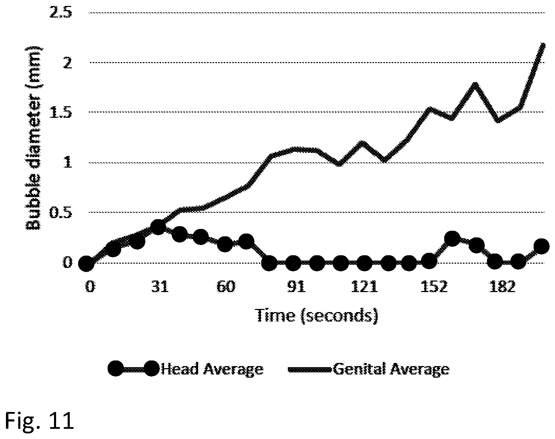

Figure 11 shows a graph of bubble diameter as a function of duration of exposure of sea lice to hydrogen peroxide;
Figure 12 shows a series of photographs of a sea louse taken after exposure to hydrogen peroxide for up to 3 minutes and 15 seconds;
Figure 13 shows photographs of sea lice after exposure to hydrogen peroxide;
Figure 14 shows photographs of sea lice after exposure to hydrogen peroxide and ultrasound;
Figure 15 shows more photographs of sea lice after exposure to hydrogen peroxide and ultrasound; and
Figure 16 shows a table summarising the results of multiple experiments in which sea lice were exposed to hydrogen peroxide and ultrasound for various combinations of durations.

### Detailed Description of an First Example Embodiment

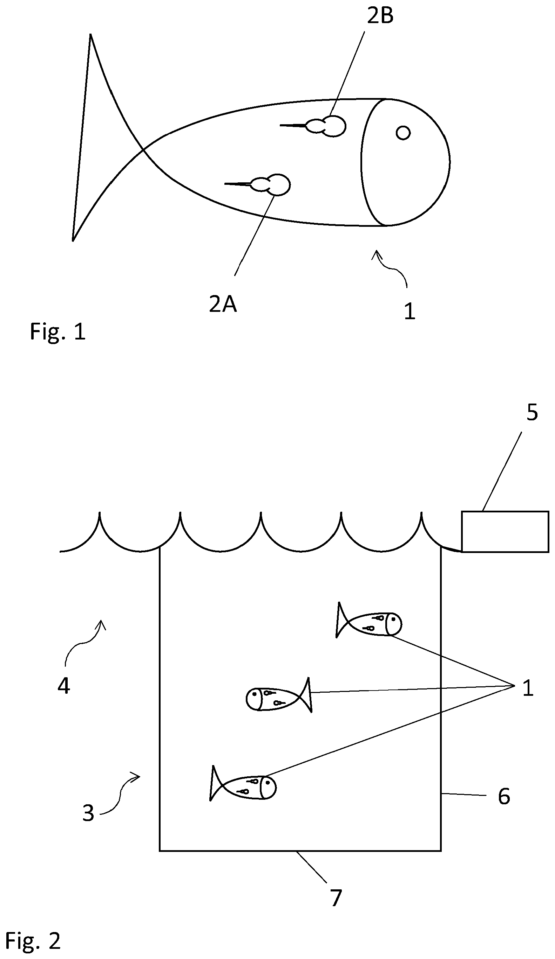

Figure 1 shows an Atlantic salmon 1 belonging to the species *Salmo salar.* The salmon 1 is infested with sea lice 2A and 2B belonging to the species *Lepeophtheirus salmonis.* The sea lice 2A and 2B are parasites which cling to and feed off the salmon, causing damage to the salmon's skin and fins and creating open wounds which permit other pathogens to enter the fish. Sea lice infestation is a particular problem in salmon farms where many salmon are reared together in a caged environment.

Figure 2 shows several salmon 1 retained within a floating cage 3 in the sea 4. The cage 3 is tethered to a floating platform 5. The cage 3 is generally cylindrical in shape, having one continuous, generally cylindrical wall 6 and a base 7. The cage 3 is open at the surface of the sea 8. The wall 6 and base 7 of the cage are formed from a nylon mesh (or a mesh made of any other suitable plastics material) having openings which are sufficiently small that the salmon cannot escape from the cage, but water is still able to flow freely through the cage wall and base.

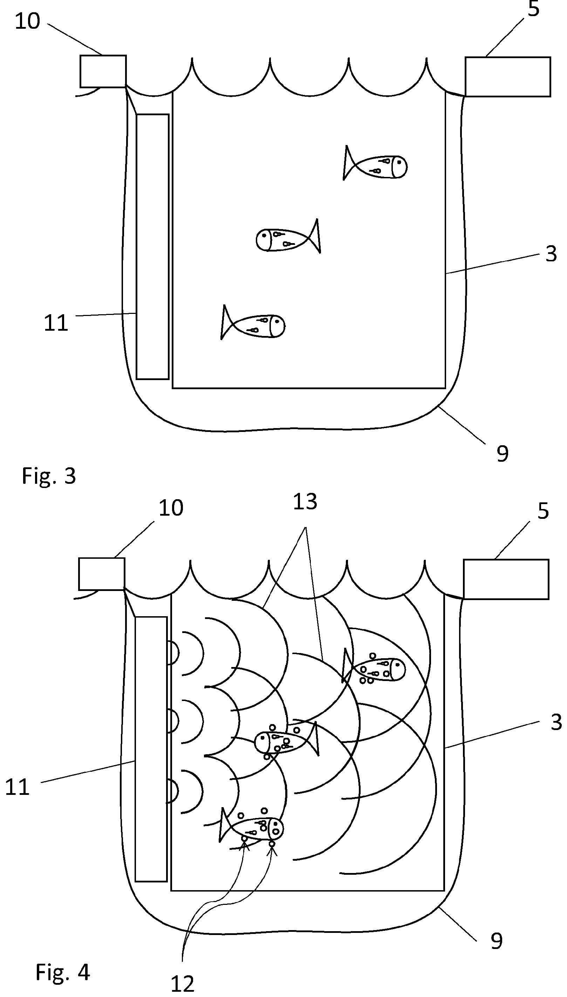

As shown in Figure 3, in order to treat the salmon to remove the sea lice, the cage 3 is surrounded by a tarpaulin enclosure 9 tethered to the floating platform 5 and a float 10. The tarpaulin enclosure 9 is waterproof and completely encircles the cage 3. Water can flow between the interior of the cage 3 and the space enclosed between the cage 3 and the tarpaulin enclosure 9 but water cannot flow beyond the tarpaulin enclosure 9. In Figure 3, an array of underwater ultrasonic transducers 11 has also been introduced into the space enclosed between the cage 3 and the tarpaulin enclosure 9. The array of underwater ultrasonic transducers 11 is tethered to the float 10 which also supports a power source for the transducers (not shown).

The apparatus shown in Figure 3 is used to treat the salmon in order to injure or kill the salmon lice and reduce the parasitic infestation. In use, hydrogen peroxide is added to the water enclosed within the tarpaulin enclosure 9. Sufficient hydrogen peroxide is added to form an aqueous solution within the enclosure 9 having a hydrogen peroxide concentration of approximately 1500 mg/L. As shown in Figure 4, the hydrogen peroxide begins to decompose in the water and generates bubbles 12 of oxygen around the surface of the salmon. Bubbles are preferentially formed on the surface of, and inside, the sea lice attached to the salmon.

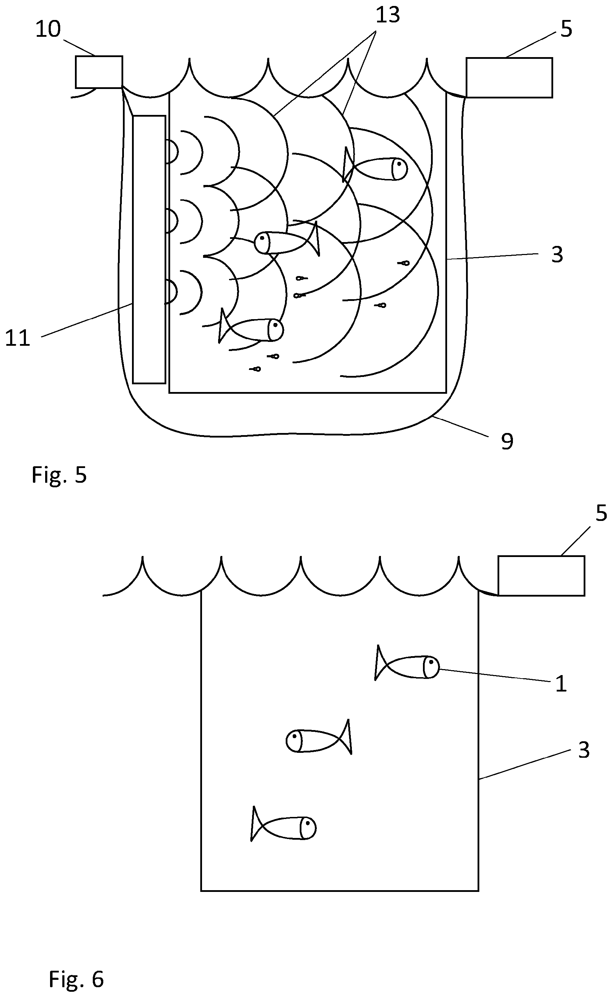

The ultrasonic transducers are switched on and the transducers generate ultrasonic waves 13 which propagate through the water enclosed within the tarpaulin enclosure 9. The ultrasonic waves cause resonance of the bubbles of oxygen and in some cases collapse of the bubbles. Resonance and collapse of the bubbles on or inside the sea lice cause sufficient physical damage to the sea lice that they die or are paralysed and in any case become detached from the salmon and float away, as shown in Figure 5.

After the treatment is finished, the ultrasonic transducers are switched off and the tarpaulin enclosure is removed, as shown in Figure 6, allowing any remaining hydrogen peroxide to disperse into the surrounding environment. The salmon in the cage have been effectively deloused.

### Detailed Description of a Second Example Embodiment

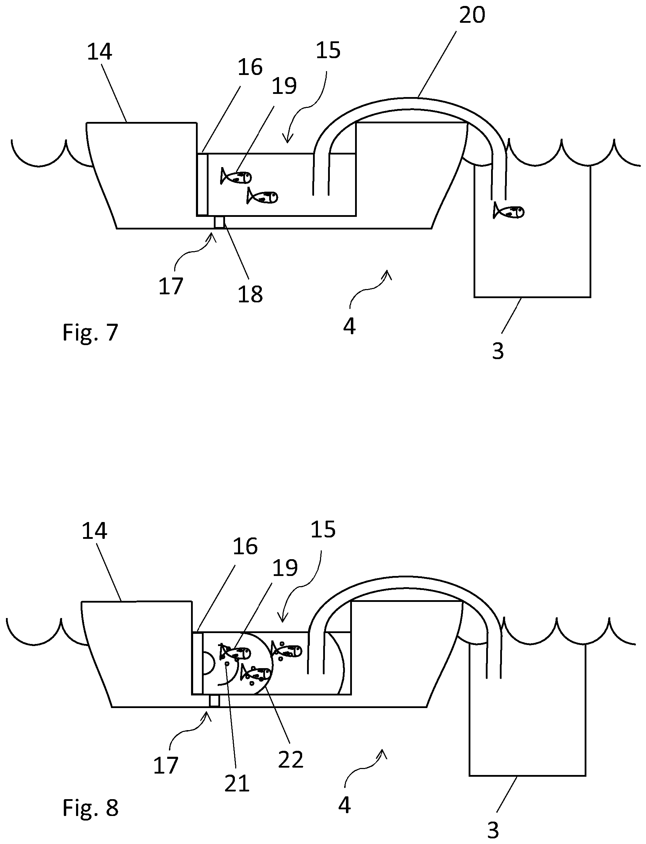

Figure 7 shows a treatment wellboat 14 adjacent the floating cage 3 in the sea 4. The wellboat 14 contains a treatment enclosure 15 configured to retain a body of water. An array of underwater ultrasonic transducers 16 is provided at one end of the treatment enclosure 15. A vent 17 connects the treatment enclosure 15 to the surrounding sea water 4 by way of a sea lice filter 18.

In use, the vent 17 is closed so that the treatment enclosure 15 is isolated from the surrounding sea water. Salmon 19, which are infested with sea lice, are drawn into the treatment enclosure 15 from the cage 3 by way of a siphon 20.

As shown in Figure 8, once transported from the cage 3 into the treatment enclosure 15, the salmon may be treated for sea lice infestation by exposure to hydrogen peroxide and ultrasound.

Hydrogen peroxide is added to the water in the treatment enclosure 15 until the hydrogen peroxide concentration of the water reaches approximately 1500 mg/L. The hydrogen peroxide decomposes to form bubbles of oxygen 21 around the salmon and, preferentially on the surface of, and inside, the sea lice attached to the salmon.

The array of ultrasonic transducers are switched on and the transducers emit ultrasonic sound waves 22 which propagate through the water enclosed within the treatment enclosure 15. The ultrasonic waves cause resonance of the bubbles of oxygen and in some cases collapse of the bubbles. Resonance and collapse of the bubbles on or inside the sea lice cause sufficient physical damage to the sea lice that they die or are paralysed and in any case become detached from the salmon and float away.

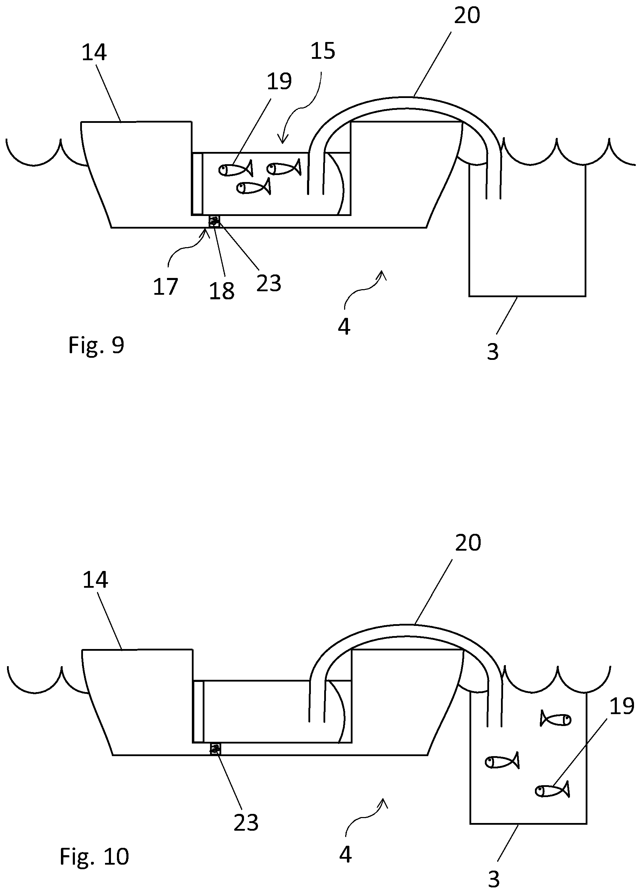

After the treatment is finished, the ultrasonic transducers are switched off and, as shown in Figure 9, the vent 22 is opened to allow the treatment water to disperse into the surrounding sea 4. Sea lice 23 which have detached from the salmon 19 are trapped by the sea lice filter 18. The salmon 19 may then be transferred back into the cage 3 by way of the siphon 16. The salmon in the cage have been effectively deloused, as shown in Figure 10.

This method of salmon delousing is based on the results of experiments discussed in more detail as follows.

### First Example Experimental Results

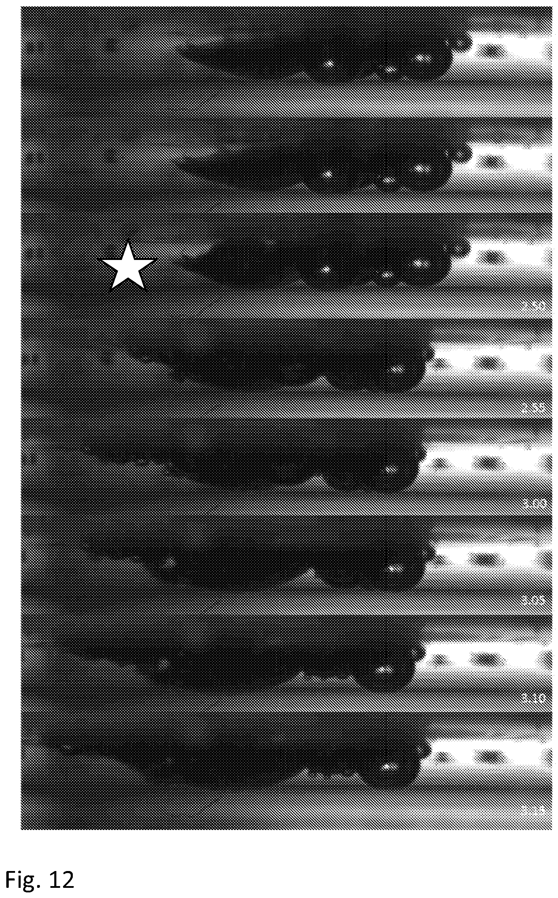

Nine sea lice (including five females and 4 males) belonging to the species *Lepeophtheirus salmonis* were exposed to an aqueous solution of hydrogen peroxide having a concentration of 1500 mg/L. Bubbles were observed forming on the lice. The bubbles were located predominantly on the genital segment of the lice and grew steadily in size. Smaller bubbles were observed growing on the cephalothorax of the lice. The smaller bubbles forming on the cephalothorax did not grow steadily in size but instead detached from the surface of the lice as the experiment progressed. The average diameter of the bubbles observed on the genital segment and the head of the lice during the experiment is plotted in Figure 12 as a function of the length of time of exposure to hydrogen peroxide.

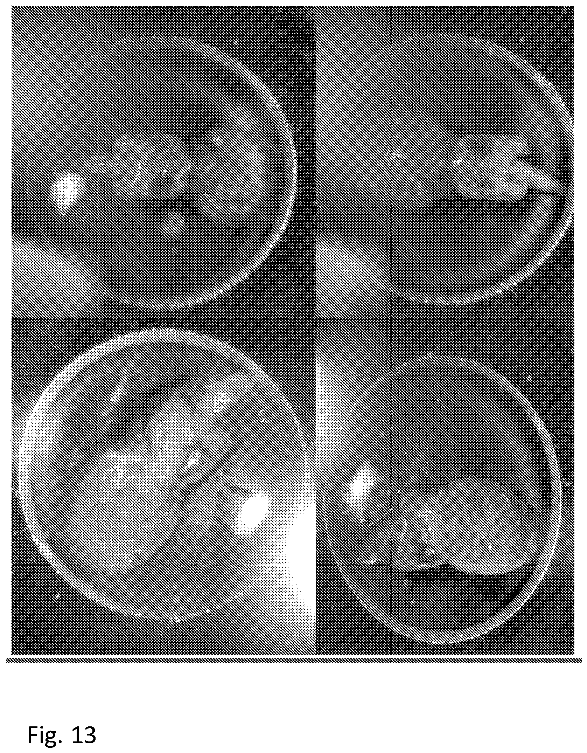

After around 3 minutes of exposure to the solution of hydrogen peroxide, rupture of the cephalothorax was observed in more than half of the lice, leading to the expulsion of a stream of bubbles. Figure 13 shows the cephalothorax of a louse rupturing after 2 minutes and 50 second of exposure to hydrogen peroxide (the photograph showing rupture of the louse is indicated by a white star), after which the release of a stream of bubbles in visible. The inventors infer from this observation that the formation of bubbles inside the lice caused an increase in internal pressure resulting in rupture.

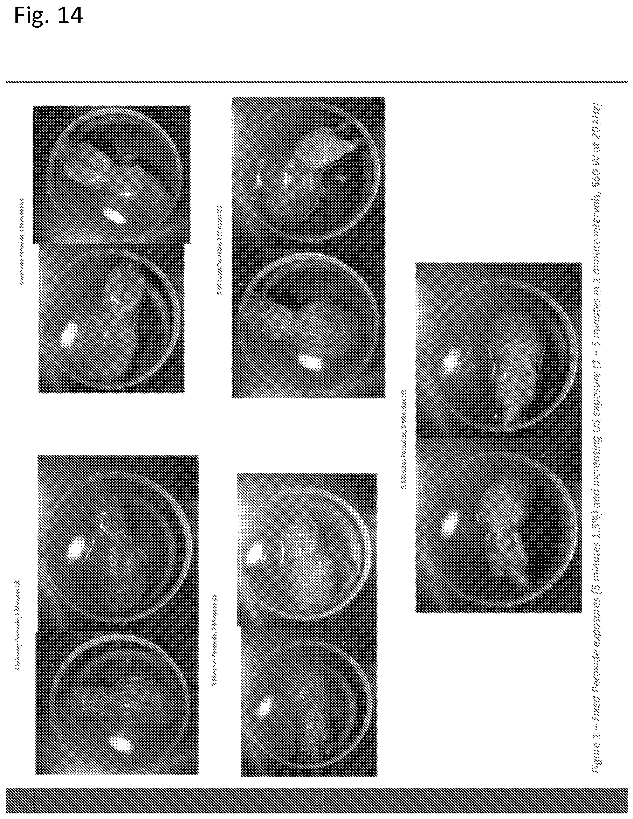

The majority of the damage caused to the lice was located in the genital segment, as shown in Figure 14.

### Second Example Experimental Results

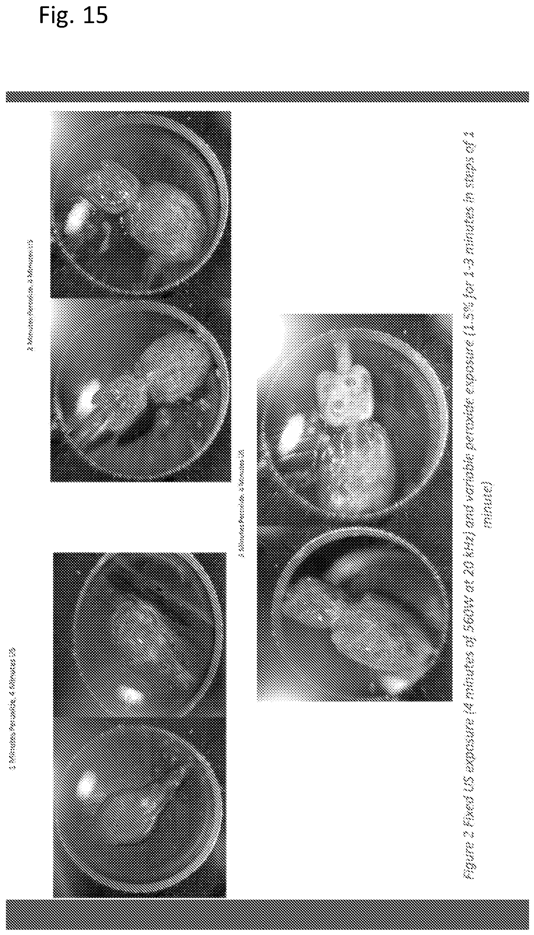

Five sea lice (all adult females) belonging to the species *Lepeophtheirus salmonis* were exposed to an aqueous solution of hydrogen peroxide having a concentration of 1500 mg/L for 5 minutes. The lice were subsequently exposed to 560 W ultrasound at a frequency of 20 kHz for 1 minute intervals up to a total duration of exposure of 5 minutes. Physical damage was observed after 4 minutes or 5 minutes of exposure to the ultrasound, as shown in Figure 15.

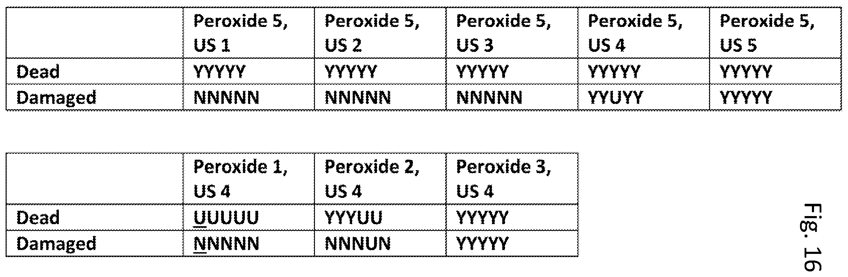

Five sea lice (four adult female and also one adult male) belonging to the species *Lepeophtheirus salmonis* were exposed to an aqueous solution of hydrogen peroxide having a concentration of 1500 mg/L for 1 minute intervals until some obvious visible damage was observed. The lice were subsequently exposed to 560 W ultrasound at a frequency of 20 kHz for 4 minutes. Physical damage was observed after 3 minutes of exposure to the hydrogen peroxide, as shown in Figure 16. Observable physical damage was restricted to the genital segment of the lice.

Figure 12 summarises the results of both experiments in a table where Y indicates the status "Yes", N indicates the status "No" and U indicates the status "Unclear". The results indicate that, in most cases, 4 minutes of ultrasound treatment is sufficient to cause observable physical damage to the sea lice after exposure to hydrogen peroxide for 5 minutes. The results also indicate that, in most cases, the combination of at least 3 minutes of hydrogen peroxide treatment followed by at least 4 minutes of ultrasound treatment is necessary to cause observable physical damage to the sea lice.

### Third Example Experimental Results

Sea lice belonging to the species *Lepeophtheirus salmonis* were exposed to an aqueous solution of hydrogen peroxide having a concentration of 1500 mg/L for 5 to 6 minutes. The lice were subsequently exposed to ultrasound at a frequency of 20 kHz for 5 minutes. After exposure to the ultrasound, all the lice were found to be dead and liquefaction or emulsion of the genital area internal structure was observed.

A control group of lice was subjected to ultrasound at a frequency of 20 kHz for 5 minutes, without exposure to hydrogen peroxide. The ultrasonic treatment alone did not have any statistically significant effect on the control group lice.

## Claims

1. Apparatus for use in reducing aquatic ectoparasitic infestation on an aquatic animal (1, 19), the apparatus comprising an aquatic enclosure (9, 15) for retaining the aquatic animal and means for directing sound waves (11, 16) into the aquatic enclosure at a sound pressure level of between 160 dB and 240 dB, wherein the aquatic enclosure retains an aqueous solution comprising hydrogen peroxide at a concentration greater than or equal to 20 mg/L, **characterised in that** the sound waves (13, 22) have a frequency of between 1 kHz and 100 kHz, inclusive.

2. The apparatus according to claim 1, wherein the means for directing sound waves (11, 16) into the aquatic enclosure (9) is configured to direct sound waves (13, 22) into the aquatic enclosure for a continuous period of at least 4 minutes.

3. The apparatus according to any one preceding claim wherein the aqueous solution comprises hydrogen peroxide at a concentration between 20 mg/L and 2500 mg/L, inclusive.

4. The apparatus according to any one preceding claim, wherein there are fish (1, 19) in the aquatic enclosure.

5. The apparatus according to any one preceding claim, wherein the means for directing sound waves (11, 16) into the aquatic enclosure (9, 15) comprises one or more transducers, optionally one or more sonic and/or ultrasonic transducers.

6. The apparatus according to any one preceding claim, wherein the means for directing sound waves (11, 16) into the aquatic enclosure (9, 15) is configured to direct sound waves (13, 22) into the aquatic enclosure to generate a local energy intensity level of between 0.001 W/cm² and 0.01 W/cm², inclusive.

7. The apparatus according to any one preceding claim, wherein the aquatic enclosure (9, 15) is a flexible enclosure, optionally a fabric enclosure, optionally wherein the enclosure is formed by one or more sheets of waterproof or water-resistant fabric.

8. The apparatus according to claim 7, wherein the aquatic enclosure (9, 15) comprises a net or cage (3) at least partially surrounded by one or more sheets of water-resistant fabric.

9. The apparatus according to any one preceding claim, wherein the aquatic enclosure (9, 15) is an aquarium.

10. The apparatus according to any one preceding claim, wherein the aquatic enclosure (9, 15) is located on a sailing vessel, optionally wherein the aquatic enclosure is located on a wellboat (14).

11. A kit of parts comprising apparatus for use in reducing aquatic ectoparasitic infestation on an aquatic animal (1, 19) and hydrogen peroxide, the apparatus comprising an aquatic enclosure (9, 15) for retaining the aquatic animal and means for directing sound waves (11, 16) into the aquatic enclosure, wherein the sound waves (13, 22) have a sound pressure level of between 160 dB and 240 dB and a frequency of between 1 kHz and 100 kHz, inclusive, the hydrogen peroxide having a concentration greater than or equal to 20 mg/L.

12. Hydrogen peroxide for use in a method of treating ectoparasitic infestation of an aquatic animal (1, 19), wherein the aquatic animal is exposed both to an aqueous solution comprising said hydrogen peroxide at a concentration greater than or equal to 20 mg/L and to sound waves from one or more transducers (11, 16), at a sound pressure level of between 160 dB and 240 dB, wherein the sound waves (13, 22) have a frequency of between 1 kHz and 100 kHz, inclusive.

13. An aqueous solution comprising hydrogen peroxide for use in a method of treating ectoparasitic infestation of an aquatic animal (1, 19), wherein the aquatic animal is exposed both to the said aqueous solution at a concentration of hydrogen peroxide greater than or equal to 20 mg/L and to sound waves (13, 22) from one or more transducers (11, 16), at a sound pressure level of between 160 dB and 240 dB, wherein the sound waves have a frequency of between 1 kHz and 100 kHz, inclusive.

## Patentansprüche

1. Vorrichtung zur Verwendung bei der Verringerung des Befalls eines Wassertieres (1, 19) mit aquatischen Ektoparasiten, wobei die Vorrichtung ein Wasserbecken (9, 15) zum Aufnehmen des Wassertiers sowie Mittel zum Einleiten von Schallwellen (11, 16) in das Wasserbecken mit einem Schalldruckpegel zwischen 160 dB und 240 dB umfasst, wobei das Wasserbecken eine wässrige Lösung enthält, die Wasserstoffperoxid in einer Konzentration von mindestens 20 mg/l enthält, **dadurch gekennzeichnet, dass** die Schallwellen (13, 22) eine Frequenz zwischen 1 kHz und 100 kHz, einschließlich, aufweisen.

2. Vorrichtung nach Anspruch 1, wobei das Mittel zum Richten von Schallwellen (11, 16) in das Wasserbecken (9) konfiguriert ist, um Schallwellen (13, 22) für einen ununterbrochenen Zeitraum von mindestens 4 Minuten in das Wasserbecken zu richten.

3. Vorrichtung nach einem der vorstehenden Ansprüche, wobei die wässrige Lösung Wasserstoffperoxid in einer Konzentration zwischen 20 mg/l und 2500 mg/l einschließlich umfasst.

4. Vorrichtung nach einem der vorstehenden Ansprüche, wobei sich Fische (1, 19) in dem Wasserbecken befinden.

5. Vorrichtung nach einem der vorstehenden Ansprüche, wobei das Mittel zum Richten von Schallwellen (11, 16) in das Wasserbecken (9, 15) einen oder mehrere Wandler umfasst, gegebenenfalls einen oder mehrere Schall- und/oder Ultraschallwandler.

6. Vorrichtung nach einem der vorstehenden Ansprüche, wobei das Mittel zum Richten von Schallwellen (11, 16) in das Wasserbecken (9, 15) konfiguriert ist, um Schallwellen (13, 22) in das Wasserbecken zu richten, um ein lokales Energieintensitätsniveau zwischen 0,001 W/cm² und 0,01 W/cm² einschließlich zu erzeugen.

7. Vorrichtung nach einem der vorstehenden Ansprüche, wobei das Wasserbecken (9, 15) eine flexible Umschließung ist, optional eine Gewebeumschließung, optional wobei die Umschließung durch eine oder mehrere Bahnen aus wasserdichtem oder wasserbeständigem Gewebe gebildet ist.

8. Vorrichtung nach Anspruch 7, wobei das Wasserbecken (9, 15) ein Netz oder einen Käfig (3) umfasst, das bzw. der mindestens teilweise von einer oder mehreren Bahnen aus wasserbeständigem Gewebe umgeben ist.

9. Vorrichtung nach einem der vorstehenden Ansprüche, wobei das Wasserbecken (9, 15) ein Aquarium ist.

10. Vorrichtung nach einem der vorstehenden Ansprüche, wobei sich das Wasserbecken (9, 15) auf einem Wasserfahrzeug befindet, insbesondere wobei sich das Wasserbecken auf einem Wellboat (14) befindet.

11. Teilesatz, umfassend eine Vorrichtung zur Verwendung bei der Verringerung von aquatischem Ektoparasitenbefall bei einem Wassertier (1, 19) und Wasserstoffperoxid, wobei die Vorrichtung ein Wasserbecken (9, 15) zum Zurückhalten des Wassertiers und Mittel zum Leiten von Schallwellen (11, 16) in das Wasserbecken umfasst, wobei die Schallwellen (13, 22) einen Schalldruckpegel zwischen 160 dB und 240 dB und eine Frequenz zwischen 1 kHz und 100 kHz, einschließlich, aufweisen, wobei das Wasserstoffperoxid eine Konzentration von größer als oder gleich 20 mg/l aufweist.

12. Wasserstoffperoxid zur Verwendung in einem Verfahren zur Behandlung eines Ektoparasitenbefalls eines Wassertiers (1, 19), wobei das Wassertier sowohl einer wässrigen Lösung, die das Wasserstoffperoxid in einer Konzentration von größer oder gleich 20 mg/l umfasst, als auch Schallwellen von einem oder mehreren Wandlern (11, 16) bei einem Schalldruckpegel zwischen 160 dB und 240 dB ausgesetzt wird, wobei die Schallwellen (13, 22) eine Frequenz zwischen 1 kHz und 100 kHz, einschließlich, aufweisen.

13. Wässrige Lösung, umfassend Wasserstoffperoxid, zur Verwendung in einem Verfahren zur Behandlung eines Ektoparasitenbefalls eines Wassertiers (1, 19), wobei das Wassertier sowohl der wässrigen Lösung in einer Konzentration von Wasserstoffperoxid von größer als oder gleich 20 mg/l als auch Schallwellen (13, 22) von einem oder mehreren Wandlern (11, 16) bei einem Schalldruckpegel zwischen 160 dB und 240 dB ausgesetzt wird, wobei die Schallwellen eine Frequenz zwischen 1 kHz und 100 kHz, einschließlich, aufweisen.

## Revendications

1. Appareil pour utilisation destiné à réduire une infestation d'ectoparasites aquatiques sur un animal aquatique (1, 19), l'appareil comprenant un enclos aquatique (9, 15) pour retenir l'animal aquatique et un moyen pour diriger des ondes sonores (11, 16) dans l'enclos aquatique à un niveau de pression acoustique compris entre 160 dB et 240 dB, dans lequel l'enclos aquatique retient une solution aqueuse comprenant du peroxyde d'hydrogène à une concentration supérieure ou égale à 20 mg/L, **caractérisé en ce que** les ondes sonores (13, 22) ont une fréquence comprise entre 1 kHz et 100 kHz, inclus.

2. Appareil selon la revendication 1, dans lequel le moyen pour diriger des ondes sonores (11, 16) dans l'enceinte aquatique (9) est configuré pour diriger des ondes sonores (13, 22) dans l'enceinte aquatique pendant une période continue d'au moins 4 minutes.

3. Appareil selon l'une quelconque revendication précédente, dans lequel la solution aqueuse comprend du peroxyde d'hydrogène à une concentration comprise entre 20 mg/L et 2500 mg/L, inclus.

4. Appareil selon l'une quelconque revendication précédente, dans lequel il y a des poissons (1, 19) dans l'enceinte aquatique.

5. Appareil selon l'une quelconque revendication précédente, dans lequel le moyen pour diriger des ondes sonores (11, 16) dans l'enceinte aquatique (9, 15) comprend un ou plusieurs transducteurs, éventuellement un ou plusieurs transducteurs sonores et/ou ultrasonores.

6. Appareil selon l'une quelconque revendication précédente, dans lequel le moyen pour diriger des ondes sonores (11, 16) dans l'enceinte aquatique (9, 15) est configuré pour diriger des ondes sonores (13, 22) dans l'enceinte aquatique afin de générer un niveau d'intensité énergétique locale compris entre 0,001 W/cm² et 0,01 W/cm², inclus.

7. Appareil selon l'une quelconque revendication précédente, dans lequel l'enceinte aquatique (9, 15) est une enceinte flexible, facultativement une enceinte en tissu, facultativement dans lequel l'enceinte est formée par une ou plusieurs feuilles de tissu imperméable ou résistant à l'eau.

8. Appareil selon la revendication 7, dans lequel l'enceinte aquatique (9, 15) comprend un filet ou une cage (3) au moins partiellement entourée d'une ou plusieurs feuilles de tissu résistant à l'eau.

9. Appareil selon l'une quelconque revendication précédente, dans lequel l'enceinte aquatique (9, 15) est un aquarium.

10. Appareil selon l'une quelconque revendication précédente, dans lequel l'enceinte aquatique (9, 15) est située sur un voilier, éventuellement dans lequel l'enceinte aquatique est située sur un bateau puits (14).

11. Kit de pièces comprenant un appareil pour utilisation destiné à réduire une infestation d'ectoparasites aquatiques sur un animal aquatique (1, 19) et du peroxyde d'hydrogène, l'appareil comprenant un enclos aquatique (9, 15) pour retenir l'animal aquatique et un moyen pour diriger des ondes sonores (11, 16) dans l'enclos aquatique, dans lequel les ondes sonores (13, 22) ont un niveau de pression acoustique comprise entre 160 dB et 240 dB et une fréquence comprise entre 1 kHz et 100 kHz, inclusivement, le peroxyde d'hydrogène ayant une concentration supérieure ou égale à 20 mg/L.

12. Peroxyde d'hydrogène pour utilisation dans un procédé de traitement d'une infestation ectoparasitaire d'un animal aquatique (1, 19), dans lequel l'animal aquatique est exposé à la fois à une solution aqueuse comprenant ledit peroxyde d'hydrogène à une concentration supérieure ou égale à 20 mg/L et à des ondes sonores provenant d'un ou plusieurs transducteurs (11, 16), à un niveau de pression acoustique compris entre 160 dB et 240 dB, dans lequel les ondes sonores (13, 22) ont une fréquence comprise entre 1 kHz et 100 kHz, inclus.

13. Solution aqueuse comprenant du peroxyde d'hydrogène pour utilisation dans un procédé de traitement d'une infestation ectoparasitaire d'un animal aquatique (1, 19), dans laquelle l'animal aquatique est exposé à la fois à ladite solution aqueuse à une concentration de peroxyde d'hydrogène une quantité supérieure ou égale à 20 mg/L et à des ondes sonores (13, 22) provenant d'un ou plusieurs transducteurs (11, 16), à un niveau de pression acoustique compris entre 160 dB et 240 dB, dans lequel les ondes sonores ont une fréquence comprise entre 1 kHz et 100 kHz, inclus.
